# EUROPÄISCHE PATENTANMELDUNG

(11) **EP 3 671 540 A1**
(43) Veröffentlichungstag der Anmeldung: **24.06.2020**
(21) Anmeldenummer: 19212748.8
(22) Anmeldetag: 30.11.2019
(51) Int. Cl.: G06K 9/00, G06T 7/00, G07C 11/00

(54) **VERFAHREN UND VORRICHTUNG ZUR AUSLÖSUNG EINER AKTION**

(30) Priorität: 20.12.2018 DE 102018222559
(71) Anmelder: Robert Bosch GmbH, 70442 Stuttgart (DE)
(72) Erfinder: Mielenz, Holger, 73760 Ostfildern (DE)

(57) **Zusammenfassung**

Die Erfindung betrifft ein Verfahren zur Auslösung einer Prüfung mit folgenden Schritten:
• Empfangen von Umfeldaten,
∘ die von wenigstens einer mobilen Einheit erfasst werden, und
∘ die das Umfeld der mobilen Einheit repräsentieren.

• Empfangen von Positionsdaten, die wenigstens die Position
∘ der mobilen Einheit und/oder
∘ von aus den Umfelddaten identifizierten Objekten repräsentieren.

• Vergleichen der von der mobilen Einheit empfangenden Daten mit Solldaten.
• Auslösung einer Prüfung, wenn die empfangenden Daten in vorgebbarer Weise von den Solldaten abweichen.

In einer vorteilhaften Ausgestaltung ist vorgesehen, dass als mobile Einheiten Kraftfahrzeuge vorgesehen sind. Aus den Umfelddaten werden Objekte identifiziert, die ihren Standort nicht verändern. Hiermit sind insbesondere Bauobjekte gemeint.

## Beschreibung

Die vorliegende Erfindung betrifft ein Verfahren und einer Vorrichtung zur Auslösung einer Aktion gemäß den Merkmalen der unabhängig formulierten Ansprüche.

### Stand der Technik

Die Verwendung von Crowd-Daten aus automatisiert fahrenden Fahrzeugen ist bereits beispielsweise für die Überwachung verkehrsbezogener Infrastruktur wie Schlaglöcher, verlorene Ladung, schiefe Schilder und dergleichen bekannt.

### Offenbarung der Erfindung

Die Erfindung betrifft ein Verfahren zur Auslösung einer Aktion mit folgenden Schritten:
- Empfangen von Umfeldaten,
   ∘ die von wenigstens einer mobilen Einheit erfasst werden, und
   ∘ die das Umfeld der mobilen Einheit repräsentieren.
- Empfangen von Positionsdaten, die wenigstens die Position
   ∘ der mobilen Einheit und/oder
   ∘ von aus den Umfelddaten identifizierten Objekten repräsentieren.
- Vergleichen der von der mobilen Einheit empfangenden Daten mit Solldaten.
- Auslösung einer Aktion, wenn die empfangenden Daten in vorgebbarer Weise von den Solldaten abweichen.

In einer vorteilhaften Ausgestaltung ist vorgesehen, dass als mobile Einheiten Kraftfahrzeuge vorgesehen sind. Aus den Umfelddaten werden Objekte identifiziert, die ihren Standort nicht verändern. Hiermit sind insbesondere Bauobjekte gemeint.

Weiterhin ist vorteilhafterweise vorgesehen, dass die Solldaten vorgegebene Vorschriften, insbesondere Bauvorschriften, bezüglich der Position der identifizierten Objekte repräsentieren. Weiterhin kann vorgesehen sein, dass neben der Position auch weitere Daten der identifizierten Objekte wie Höhe und Breite empfangen werden.

Die Erfindung ermöglicht vorteilhafterweise einen sogenannten Backend Service. Dabei werden Daten für das Bauamt zur Überwachung von baulichen Vorgaben bereitgestellt, indem Crowd-Daten von automatisiert fahrenden Fahrzeugen mittels derer Umfeldsensorik erfasst, georeferenziert, an einen Serverdienst versendet und ausgewertet werden.

Der Vorteil liegt in einer drastischen Ausdehnung des Kontrollgebietes im Vergleich zu bisher durchgeführten Stichproben mit einhergehend steigenden Steuereinnahmen. Ferner kann der Aufwand für Kontrolle durch Außendienst-Mitarbeiter Außendienste reduziert werden.

Kern der Erfindung in einer konkreten Ausführungsform ist die Verwendung von Umfelddaten automatisiert fahrender Fahrzeuge für die Ermittlung von Größen zur Überwachung von Merkmalen der Bauaufsichtsbehörde. Derartige Merkmale sind beispielsweise die Einhaltung von Baugrenzen, Baulinien, Bauräumen, Sicherstellung der Bepflanzungsvorgaben (Pflanzenart, -höhe, Pflanzort,...).

In einer vorteilhaften Ausgestaltung der Erfindung ist vorgesehen, dass die Auslösung einer Aktion derart geschieht, dass die Verifizierung der Abweichung an der Position des identifizierten Objekts veranlasst wird. Dabei ist insbesondere vorgesehen, dass die Auslösung der Aktion derart geschieht, dass die Verifizierung der Abweichung an der Position des identifizierten Objekts durch eine weitere mobile Einheit veranlasst wird. Alternativ kann aber auch vorgesehen sein, dass automatisch eine Maßnahme zur Abstellung der Abweichung veranlasst wird.

Die Umfelddaten können mittels wenigstens einer Videokamera wenigstens einer mobilen Einheit erfasst werden,

Die Erfindung betrifft weiterhin eine Vorrichtung zur Durchführung des erfindungsgemäßen Verfahrens.

Weitere vorteilhafte Ausgestaltungen der Erfindung sind den Unteransprüchen und dem Ausführungsbeispiel zu entnehmen.

### Zeichnungen

Ausführungsbeispiele der Erfindung werden anhand der Zeichnungen und der nachfolgenden Beschreibung näher erläutert. Es zeigen:
Figur 1 eine schematische Darstellung des Datenaustauschs gemäß einem Ausführungsbeispiel der Erfindung,
Figur 2 eine schematische Darstellung der Umgebung eines Kraftfahrzeugs,
Figur 3 ein Flussdiagramm gemäß einem Ausführungsbeispiel der Erfindung.

### Ausführungsformen der Erfindung

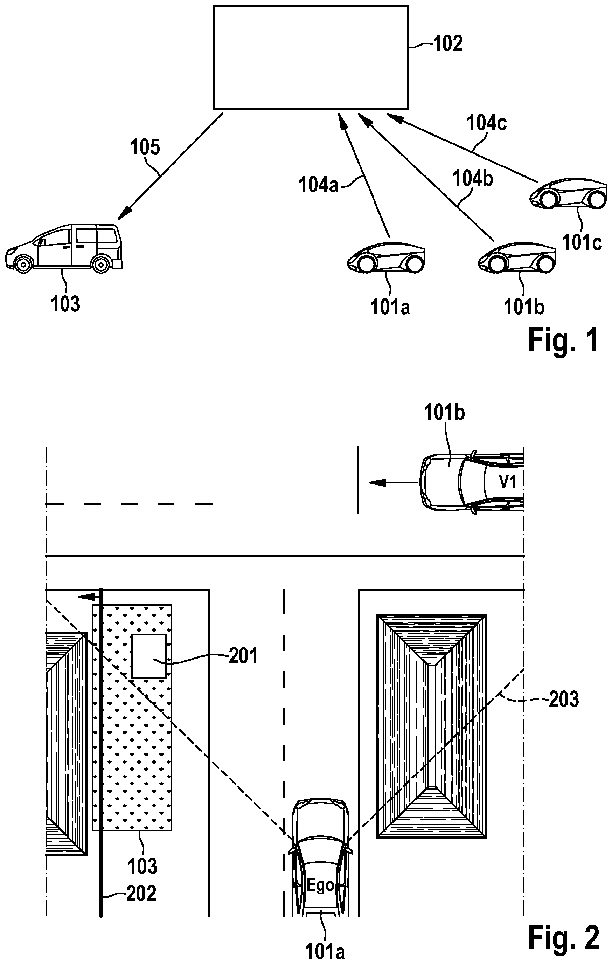

Figur 1 zeigt mit den Bezugszeichen 101a, 101b und 101c Kraftfahrzeuge, die Daten 104 a, 104b und 104c an einen zentralen Server 102 schicken. Nach einem noch darzustellenden Verfahren wird im Server 102 eine Prüfung ausgelöst. Die Kraftfahrzeuge 101a, 101b und 101c können hochautomatisiert fahrende Fahrzeuge sein.

In Reaktion auf die Auslösung einer Aktion wird gemäß diesem Ausführungsbeispiel das weitere Kraftfahrzeug 103 mittels der Daten 103 angesteuert.

Die Figur 2 illustriert die erfindungsgemäße Situation gemäß einem Ausführungsbeispiel. Hiernach erfasst das Kraftfahrzeug 101a mittels Umfeldsensorik innerhalb der Grenzen 203 die Umgebung. In diesem Zusammenhang wird auch das Gebäude 201 erfasst. Dies kann beispielsweise ein auf einer Rasenfläche 204 stehender Kinderspielturm 201 sein, der vor der Baulinie 202 auf der hauseigenen Rasenfläche 204 errichtet wurde. Dies ist gemäß geltender Bauvorschrift grundsätzlich nur mit einem Bauantrag möglich und je nach Bebauungsplan auch zumeist nur bis zu einer Mindesthöhe von ca. 3m generell beantragbar. Diese Informationen (Objekt 201, Objektausmaße, Position/Georeferenz) werden an den Server 102 übertragen.

Wie im in der Figur 2 dargestellten Beispiel zu sehen, wird es gemäß der Erfindung ermöglicht, die Einhaltung von Bebauungsplänen automatisch zu überprüfen. Sollte beispielsweise, wie in der Figur 2 gezeigt, ermittelt werden, dass keine Baugenehmigung für das Objekt 201 vorliegt und/oder die erlaubte Höhe, das erlaubte Volumen oder eine sonstige genehmigungspflichtige Eigenschaft des Objekts 201 überschritten wird, kann, gegebenenfalls nach einer erneuten Verifizierung der Gegebenheiten vor Ort, ein Bescheid zur Abstellung der Gegebenheit veranlasst werden.

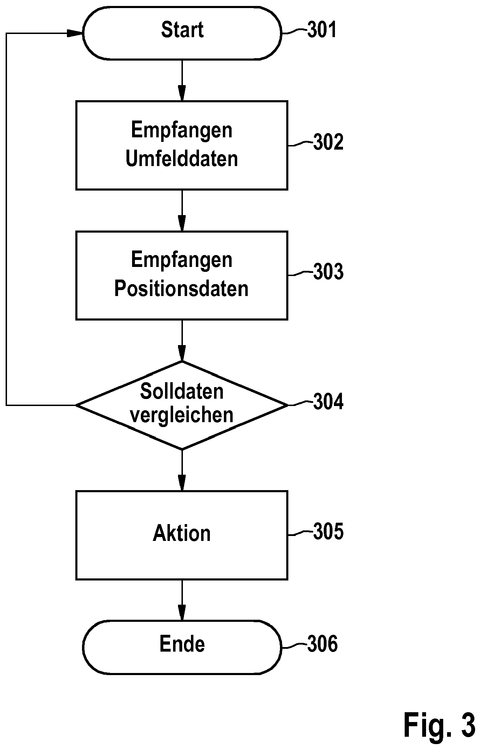

Anhand der Figur 3 wird das im Server 102 ablaufende Verfahren beschrieben.

Nach dem Startschritt 301 werden im Schritt 302 die von den Fahrzeugen 101a-c ermittelten Umfelddaten empfangen.

Im Schritt 303 werden dann die Positionsdaten der Fahrzeuge 101a-c und/oder die Positionsdaten von aus den Umfelddaten identifizierten Objekten empfangen. Darüber hinaus werden neben der Position auch weitere Daten der identifizierten Objekte 201 wie Höhe und Breite empfangen.

Im Schritt 304 werden nun die von der mobilen Einheit in den Schritten 302 und 303 empfangenden Daten mit Solldaten verglichen. Das heißt, dass die Objektdaten mit geltenden Bauvorschriften verglichen werden.

Ergibt der Vergleich im Schritt 304 keine Abweichung der Objektdaten zu den geltenden Bauvorschriften, so wird wieder zum Startschritt 301 begonnen.

Ergibt der Vergleich im Schritt 304 eine Abweichung der Objektdaten zu den geltenden Bauvorschriften, so wird im Schritt 305 eine Aktion ausgelöst. Die Auslösung der Aktion im Schritt 305 kann in diesem Ausführungsbeispiel zur Folge haben, dass ein weiteres Fahrzeug 103 automatisch zu der Position der festgestellten Abweichung zur Prüfung geschickt wird. Es kann aber im Schritt 305 auch vorgesehen sein, dass direkt ein Bescheid zur Abstellung der Abweichung veranlasst wird.

Nach dem Endschritt 306 wird das Verfahren erneut gestartet.

Zusammenfassend ist in dieser Ausgestaltung der Erfindung vorgesehen:
- Wenigstens ein automatisiert fahrendes Fahrzeug 101a-c mit ausreichender Umfeldsensorik.
- Ein System zur Georeferenzierung des oder der Fahrzeugs 101a-c.
- Eine Umfeldsensorik zur Ermittlung von baurechtlich relevanten Merkmalen Objektkonturen, Objekterscheinungsform, Pflanzen, Pflanzenarten, Fassadenflächen (geometrisch und Art), Fenstergrößen, Gartenzaungeometrie und -art, ...
- Eine Georeferenzierung der jeweiligen Information.
- Versenden an den Backend-Server 102.
- Assoziation der georeferenzierten Umfeldinformationen mit digitalen Informationen zum Baubestand im Server 102.
- Eine Analyse, ob Änderungsstände vorliegen.
- Eine Bewertung, ob Änderung gegen eine Bauvorgabe verstößt.
- Auslösen wenigstens einer Aktion, wenn Abweichung erkannt wurde.

Eine Alternative könnte darin bestehen, dass das erfassende Fahrzeug 101a eine hochgenaue Karte mit den baurechtlich relevanten Informationen überstellt bekommt und im Fahrzeug Abweichungen analysiert. Der Backend-Server 102 erhält dann Abweichungs-Information und veranlasst die Aktion.

Die Vorteile der hier bezeichneten Erfindung sind:
- Eine Vereinfachung der Kontrolle von Bauvorhaben.
- Eine Kontrollautomatisierung.
- Erhöhte Steuereinnahmen durch effizientes Vorgehen.
- Eine Reduktion von Außendienst-Mitarbeitern.
- Eine zielgerichtete Bewertung automatisiert erkannter Gebiete.

## Patentansprüche

1. Verfahren zur Auslösung einer Aktion, **gekennzeichnet durch** die Schritte:
• Empfangen (302) von Umfelddaten,
∘ die von wenigstens einer mobilen Einheit (101) erfasst werden, und
∘ die das Umfeld (203) der mobilen Einheit (101) repräsentieren,
• Empfangen (303) wenigstens von Positionsdaten, die wenigstens die Position
∘ der mobilen Einheit (101) und/oder
∘ von aus den Umfelddaten identifizierte Objekten (201) repräsentieren,
• Vergleichen (304) der von der mobilen Einheit empfangenden Daten mit Solldaten (202) und
• Auslösung (305) einer Aktion, wenn die empfangenden Daten in vorgebbarer Weise von den Solldaten abweichen.

2. Verfahren nach Anspruch 1, **dadurch gekennzeichnet, dass** als mobile Einheiten Kraftfahrzeuge (101) vorgesehen sind.

3. Verfahren nach Anspruch 1, **dadurch gekennzeichnet, dass** aus den Umfelddaten Objekte (201) identifiziert werden, die ihren Standort nicht verändern.

4. Verfahren nach Anspruch 1, **dadurch gekennzeichnet, dass** die Solldaten vorgegebene Vorschriften bezüglich der Position der identifizierten Objekte (201) repräsentieren, wobei insbesondere vorgesehen ist, dass neben der Position auch weitere Daten der identifizierten Objekte (201) wie Höhe und Breite empfangen werden.

5. Verfahren nach Anspruch 4, **dadurch gekennzeichnet, dass** die Solldaten vorgegebene Bauvorschriften bezüglich der erlaubten Position der identifizierten Objekte (201) repräsentieren.

6. Verfahren nach Anspruch 1, **dadurch gekennzeichnet, dass** die Auslösung der Aktion derart geschieht, dass
• die Verifizierung der Abweichung an der Position des identifizierten Objekts (201) veranlasst wird oder
• automatisch eine Maßnahme zur Abstellung der Abweichung veranlasst wird.

7. Verfahren nach Anspruch 1, **dadurch gekennzeichnet, dass** die Auslösung einer Verifizierung derart geschieht, dass die Verifizierung der Abweichung an der Position des identifizierten Objekts (201) durch eine weitere mobile Einheit (103) veranlasst wird.

8. Verfahren nach Anspruch 1, **dadurch gekennzeichnet, dass** die Umfelddaten mittels wenigstens einer Videokamera wenigstens einer mobilen Einheit (101) erfasst werden,

9. Verfahren nach Anspruch 1 und/oder 7, **dadurch gekennzeichnet, dass** als mobile Einheiten (101) wenigstens zum Teil automatisiert fahrende Kraftfahrzeuge (101) vorgesehen sind.

10. Vorrichtung (102) zur Durchführung des Verfahrens nach wenigstens einem der vorangehenden Ansprüche.
